# EUROPÄISCHE PATENTSCHRIFT

(11) **EP 1 329 605 B1**
(45) Veröffentlichungstag und Bekanntmachung des Hinweises auf die Patenterteilung: **29.06.2005**
(21) Anmeldenummer: 02026119.4
(22) Anmeldetag: 23.11.2002
(51) Int. Cl.: F01N 7/08

(54) **Abgasanlage für Verbrennungsmotoren, mit einer Strömungsweiche**
Exhaust system for an internal combustion engine comprising a flow diverter
Système d'échappement pour un moteur a combustion interne avec un déviateur du flux

(30) Priorität: 14.01.2002 DE 10201041
(43) Veröffentlichungstag der Anmeldung: 23.07.2003
(73) Patentinhaber: J. Eberspächer GmbH & Co. KG, 73730 Esslingen (DE)
(72) Erfinder: Gaiser, Gerd, Dr., 72768 Reutlingen (DE); Zacke, Peter, Dr., 73095 Albershausen (DE); Damson, Björn, Dr., 70569 Stuttgart (DE)

(56) Entgegenhaltungen:
- US-A- 2 084 142
- US-A- 4 031 867
- US-A- 5 533 487

## Beschreibung

Die Erfindung bezieht sich auf eine Abgasanlage für Verbrennungsmotoren, aufweisend eine Strömungsweiche nach dem Oberbegriff von Anspruch 1.

Eine derartige Abgasanlage ist aus dem US-Patent Nr. 5.533.487 bekannt, wobei die Strömungsweiche über ein Abgasrückführungsventil im Innenrohr gesteuert wird.

Bei einigen Ausführungsformen von Abgasanlagen stellt sich die Aufgabe, dass man den Abgasstrom wahlweise durch den einen oder den anderen Strömungsweg strömen lassen möchte. Als ein Beispiel seien zweiflutige Abgasanlagen genannt, bei denen man zu bestimmten Zeiten den einen Abgasstrang benutzen möchte und zu bestimmten anderen Zeiten den anderen Abgasstrang benutzen möchte. Zur Umschaltung zwischen den zwei Strömungswegen hat man bisher gesteuerte Abgasklappen verwendet. Abgasklappen sind wegen der hohen Temperatur des Abgases sehr problematisch, insbesondere hinsichtlich ihrer Lagerung, ihrer Wärmedehnung, ihrer Abdichtung und ihrer Geräusche beim Umschalten.

Der Erfindung liegt das technische Problem zugrunde, eine Abgasanlage mit einer Strömungsweiche verfügbar zu machen, die sich ohne Verwendung bewegter Teile zwischen zwei Abströmwegen umschalten lässt.

Diese Aufgabe wird durch eine Abgasanlage nach Anspruch 1 gelöst.

Durch die Erfindung wird eine Abgasanlage mit einer Strömungsweiche geschaffen, die ohne bewegte Teile arbeitet und in Reaktion auf die Strömungsverhältnisse des zuströmenden Abgasstroms einen mehr oder weniger großen Teil des Abgasstroms dem ersten Abströmweg einerseits und dem zweiten Abströmweg andererseits zuteilt.

Die wichtigsten Parameter des Abgasstroms eines Verbrennungsmotors sind sein Massenstrom (z.B. in kg/s), seine Temperatur und seine Strömungsgeschwindigkeit. Diese Parameter sind nicht alle unabhängig voneinander. Aus einem gegebenen Massenstrom mit gegebener Temperatur resultiert eine (mittlere) Strömungsgeschwindigkeit (bei einem betrachteten Strömungsquerschnitt). Wenn sich bei konstant gehaltenem Massenstrom die Temperatur erhöht oder erniedrigt, erhöht sich wegen der damit einher gehenden Dichteänderung des Abgases die Strömungsgeschwindigkeit oder erniedrigt sich. Mit der Erfindung wird eine Abgasanlage mit Strömungsweiche geschaffen, bei welcher der dem zweiten Abströmweg zugeteilte Teil des Abgasstroms bei Strömungsgeschwindigkeiten in einem oberen Teilbereich desjenigen Bereichs von Strömungsgeschwindigkeiten, der beim Betrieb der Abgasanlage vorkommt, sehr viel größer als in einem unteren Teilbereich der vorkommenden Strömungsgeschwindigkeiten ist. Eine analoge Aussage könnte man für den Massenstrom oder für die Temperatur des Abgasstroms machen.

Bei einem niedrigen Teilbereich der vorkommenden Strömungsgeschwindigkeiten (man könnte auch sagen: Bei einem niedrigen Teilbereich der vorkommenden Massenströme oder Bei einem niedrigen Teilbereich der vorkommenden Abgastemperaturen, wobei die gegenseitige Abhängigkeit der genannten Parameter zu berücksichtigen ist) strömt das Abgas überwiegend oder sogar nahezu vollständig nur durch den freien zentralen Strömungsweg im Zulaufrohr und von dort in den Eintrittsquerschnitt des Innenrohrs. Bei höheren Strömungsgeschwindigkeiten in einem oberen Teilbereich der vorkommenden Strömungsgeschwindigkeiten (man könnte auch sagen: Bei höheren Massenströmen oder Bei höheren Abgastemperaturen, wobei die gegenseitige Abhängigkeit dieser Parameter zu berücksichtigen ist) durchströmt hingegen ein sehr erheblicher Teil des Abgasstroms den Drallerzeuger und verlässt diesen als Drallströmung mit erheblicher Komponente in Umfangsrichtung. Bei kräftiger Drallströmung wird wegen der Zähigkeitskräfte im Abgas auch dem durch den freien zentralen Strömungsweg strömenden Teil des Abgases ein Drall aufgeprägt. Auf Grund der in der Gesamt-Drallströmung vorhandenen Zentrifugalkräfte wird die Strömung nach Verlassen des Zulaufrohrs weit überwiegend oder nahezu vollständig in den Ringraum zwischen dem Innenrohr und der Umfangswand der Strömungsweiche strömen. - Bei mittleren Strömungsgeschwindigkeiten bzw. Massenströmen bzw. Abgastemperaturen werden hingegen sowohl das Innenrohr als auch der Ringraum zwischen dem Innenrohr und der Umfangswand durchströmt.

Bei Verbrennungsmotoren steigt der durch die Abgasanlage strömende Massenstrom generell mit zunehmender Drehzahl an (wobei dieser Anstieg wegen der Überlagerung anderer Effekte nicht linear ist). Da das Zulaufrohr einen festgelegten Strömungsquerschnitt hat, erhöht sich entsprechend auch die Strömungsgeschwindigkeit. Wenn man bei konstant gehaltenem Massenstrom den Fall höherer Abgastemperatur betrachtet, dann beobachtet man - wegen der verringerten Dichte des Abgases - eine höhere Strömungsgeschwindigkeit. Diese Zusammenhänge führen dazu, dass bei niedrigen Lastzuständen des Verbrennungsmotors (besonders typisch: Leerlauf, aber auch Betrieb mit ziemlich niedrigen Drehzahlen, ganz besonders bei nicht weit geöffneter Drosselklappe) ein Betriebszustand der Strömungsweiche mit überwiegender oder nahezu vollständiger Abströmung des Abgases in dem ersten Abströmweg herrscht. - Bei hohen Lastzuständen des Verbrennungsmotors (besonders typisch: höhere Drehzahlen, ganz besonders wenn die Drosselklappe weit geöffnet ist) herrscht hingegen der andere Betriebszustand der Strömungsweiche, bei dem der abströmende Abgasstrom weit überwiegend oder sogar nahezu vollständig in dem zweiten Abströmweg strömt. - Bei Betriebszuständen des Verbrennungsmotors zwischen den geschilderten Extremen hat man eine Strömungsaufteilung irgendwo zwischen den Extremen.

Die beschriebene, überwiegende oder nahezu vollständige, selbsttätige Bestimmung des ersten Abströmwegs oder des zweiten Abströmwegs kann man insbesondere bei folgenden Situationen einsetzen:
a) Der erste Abströmweg führt zu einem ersten Strang bzw. zu einer ersten Flut der Abgasanlage, und der zweite Abströmweg führt zu einem zweiten Strang bzw. zu einer zweiten Flut der Abgasanlage. Die erste Flut der Abgasanlage ist insbesondere in ihrer Schalldämpfung für kleinere Massenströme optimiert, während die zweite Flut der Abgasanlage insbesondere in ihrer Schalldämpfung für größere Massenströme optimiert ist;
b) analog zu a), aber in der ersten Flut optimierter katalytischer Konverter oder optimierte katalytische Konverter für geringeren Massenstrom, und in der zweiten Flut optimierter katalytischer Konverter oder optimierte katalytische Konverter für höheren Massenstrom;
c) analog zu a), aber die erste Flut der Abgasanlage ausgelegt auf geringen Wärmeverlust bis zu einem katalytischen Konverter, um rasches Erreichen der "Anspringtemperatur" zu fördern; und zweite Flut der Abgasanlage ausgelegt auf hohe Wärmeabfuhr, um einen katalytischen Abgaskonverter oder mehrere katalytische Abgaskonverter vor zu hohen Abgastemperaturen zu schützen.

Die zwei Fluten der Abgasanlage müssen nicht unbedingt getrennt bis zum hinteren Ende der Abgasanlage sein, sondern können sich auch vor dem Ende der Abgasanlage wieder vereinigen.

Was die Flächengröße des Eintrittsquerschnitts des Innenrohrs anlangt, ist es bevorzugt, wenn diese Flächengröße in dem Bereich liegt, der mit der Querschnittsfläche des freien zentralen Bereichs beginnt und bis zu dem Gesamtströmungsquerschnitt des stromabwärtigen Endes des Zulaufrohrs geht. Es ist aber auch möglich, den Eintrittsquerschnitt des Innenrohrs noch größer zu machen Vorzugsweise ist die Strömungsweiche so ausgelegt, dass mindestens 40%, besonders bevorzugt mindestens 50% und ganz besonders bevorzugt mindestens 60%, des zuströmenden Abgasstroms in dem ersten Strömungsweg abströmen, wenn der Abgasstrom eine Strömungsgeschwindigkeit in einem unteren Teilbereich des beim Betrieb in der Abgasanlage auftretenden Bereichs von Strömungsgeschwindigkeiten hat; der genannte untere Teilbereich umfasst vorzugsweise 0 bis 10%, besonders bevorzugt 0 bis 20% und höchst bevorzugt 0 bis 30%, des Gesamtbereichs der auftretenden Strömungsgeschwindigkeiten.

Vorzugsweise ist die Strömungsweiche so ausgelegt, dass mindestens 80%, besonders bevorzugt mindestens 90%, des zuströmenden Abgasstroms in dem zweiten Strömungsweg abströmen, wenn der Abgasstrom eine Strömungsgeschwindigkeit in einem oberen Teilbereich des beim Betrieb in der Abgasanlage auftretenden Bereichs von Strömungsgeschwindigkeiten hat; der genannte obere Teilbereich umfasst vorzugsweise 80 bis 100%, besonders bevorzugt 70 bis 100%, des Gesamtbereichs der auftretenden Strömungsgeschwindigkeiten.

Vorzugsweise ist der Drallerzeuger mit seiner Außenseite an der Innenseite des Zulaufrohrs befestigt, besonders bevorzugt angeschweißt. Auf diese Weise ist eine äußere Umströmung des Drallerzeugers ausgeschlossen. Alternativ ist bevorzugt, dass der Drallerzeuger integral mit dem Zulaufrohr hergestellt worden ist, insbesondere durch Gießen oder durch Hochdruckumformung.

Zur konkreten technischen Verwirklichung des Dralterzeugers gibt es eine Reihe von Möglichkeiten. Nach einer ersten bevorzugten Möglichkeit weist der Drallerzeuger einen ringförmigen Kranz von Leitschaufeln auf. Nach einer zweiten bevorzugten Möglichkeit weist der Drallerzeuger mindestens ein wendelförmig längs des Zulaufrohrs verlaufendes Strömungsleitelement auf; die Ausdrucksweise "längs des Zulaufrohrs" soll nicht etwa "längs des gesamten Zulaufrohrs" bedeuten, sondern lediglich die Längsausrichtung des Strömungsleitelements wiedergeben.

Funktional kommt es erfindungsgemäß bei der Strömungsweiche darauf an, dass bei relativ niedrigen Strömungsgeschwindigkeiten des Abgases (bzw. Massenströmen bzw. Temperaturen) praktisch überhaupt kein oder nur wenig Drall erzeugt wird, während bei relativ hohen Strömungsgeschwindigkeiten (bzw. Massenströmen bzw. Temperaturen) viel Drall erzeugt wird, so dass sich das Verhältnis der Teilströme in den ersten Abströmweg und in den zweiten Abströmweg ändert. Dabei kann auf praktisch vollständige "Strömungsumschaltung" ausgelegt werden, also unterhalb eines ersten Schwellenwerts der Strömungsgeschwindigkeit praktisch 100% in den ersten Abströmweg und praktisch 0% in den zweiten Abströmweg, und oberhalb eines zweiten Schwellenwerts der Strömungsgeschwindigkeit praktisch 0% in den ersten Abströmweg und praktisch 100% in den zweiten Abströmweg. Alternativ kann man aber die Auslegung mit weniger scharfer Strömungsumschaltung machen, also z.B. nie weniger als 20% (vorzugsweise nie weniger als 10%) im ersten Strömungsweg oder nie weniger als 30% (vorzugsweise nie weniger als 20%) im zweiten Abströmweg.

Außerdem kann man durch Auslegung der Strömungsweiche bestimmen, wann das Umschalten deutlich einsetzt und wann das Umschalten deutlich aufhört.

Folgende Geometrieparameter, welche die Auslegung beeinflussen, seien genannt:
- Anzahl der Leitschaufeln über den Umfang;
- Anzahl der wendelförmigen Strömungsleitelemente, die umfangsmäßig versetzt vorgesehen sind;
- Überlappung der Leitschaufeln in axialer Blickrichtung;
- Anstellwinkel der Leitschaufeln oder des wendelförmigen Strömungsteitelements ("Steigung");
- Höhe der Leitschaufeln oder des Strömungsleitelements und dadurch bestimmt der Durchmesser des freien zentralen Strömungswegs;
- Länge der Leitschaufeln bzw. des Strömungsleitelements in Axialrichtung;
- Position des Drallerzeugers in axialer Hinsicht in dem Zulaufrohr (axialer Abstand zum Ende des Zulaufrohrs oder axialer Überstand über das Ende des Zulaufrohrs hinaus);
- zunehmender Anstellwinkel der Leitschaufeln (d.h. gekrümmte Leitschaufeln) oder zunehmender Anstellwinkel des Strömungsleitelements (d.h. abnehmende Steigung) längs des Drallerzeugers;
- zunehmende Höhe der Leitschaufeln oder des Strömungleitelements längs des Drallerzeugers;

- Durchmesser des Zulaufrohrs;
- Durchmesser des Innenrohrs;
- Durchmesser der Strömungsweiche bei der Umfangswand bzw. Strömungsquerschnitt des Ringraums zwischen dem Innenrohr und der Umfangswand;
- Winkel der Erweiterung bei dem Erweiterungsabschnitt;

- axialer Abstand zwischen dem Drallerzeuger und dem Innenrohr.

Die Anzahl der Leitschaufeln bzw. der Strömungsleitelemente hat einen erheblichen Einfluss auf die Gleichmäßigkeit des erzeugten Zentrifugalfeldes. Eine größere Anzahl bewirkt ein gleichmäßiges Zentrifugalfeld. Andererseits nimmt der Druckverlust des Drallerzeugers mit der Anzahl zu.
Wenn der Drallerzeuger mit überlappenden Leitschaufeln ausgelegt wird, hat man schon bei geringen Strömungsgeschwindigkeiten einen fühlbaren Strömungswiderstand im Drallerzeuger; die Abströmung erfolgt besonders ausgeprägt nur in dem ersten Abströmweg. Andererseits hat man bei hohen Strömungsgeschwindigkeiten einen relativ hohen Strömungswiderstand.

Der Anstellwinkel der Leitschaufeln bzw. des Strömungsleitelements hat einen besonders großen Einfluss auf die Stärke des erzeugten Dralls. Stark angestellte Leitschaufeln führen z.B. schon bei mittleren Strömungsgeschwindigkeiten zu einem so starken Drall, dass der Teil des Abgasstroms in dem ersten Abströmweg sehr klein wird. Bei besonders hohen Zentrifugalkräften der Drallströmung wird der Druck im Kernbereich der Strömung, d.h. durch den freien zentralen Strömungsweg, so klein, dass ein Abströmen in dem ersten Abstömweg weitgehend vermieden werden kann. Der Anstellwinkel wird relativ zur Axialrichtung des Zulaufrohrs gemessen.

Die Höhe der Leitschaufeln bzw. des Strömungsleitelements, besonders in Relation zu dem Gesamtdurchmesser des Zulaufrohrs, hat besonders Einfluss auf den Anteil der Strömung, der bei kleinen Strömungsgeschwindigkeiten in dem ersten Abströmweg strömen soll. Bei relativ geringer Höhe der Leitschaufeln bzw. des Strömungsleitelements und damit einem großen Durchmesser des freien zentralen Strömungswegs wird ein größerer Teil der Strömung in dem ersten Abströmweg abströmen.

Bei der axialen Länge der Leitschaufeln bzw. des Strömungsleitelements ist die Tendenz grundsätzlich so, dass bei einer größeren Länge ein stärkerer Drall auch im freien zentralen Strömungsweg erzeugt wird. Mit zunehmender Länge nimmt der Druckverlust des Drallerzeugers zu. Längs des Drallerzeugers zunehmender Anstellwinkel der Leitschaufeln bzw. des Strömungsleitelements und längs des Drallerzeugers zunehmende Höhe der Leitschaufeln bzw. des Strömungsleitelements reduzieren den Druckverlust der Strömungsweiche im Vergleich zu Drallerzeugung ohne diese Maßnahmen.

Der Durchmesser des Innenrohrs in Relation zu dem Durchmesser des freien zentralen Strömungswegs ist von besonders großem Einfluss auf die Bestimmung des Abströmwegs. Je größer in dieser Relation der Durchmesser des Innenrohrs ist, desto schärfer kann man bei niedrigen Strömungsgeschwindigkeiten einen Anteil von praktisch 100% der Abströmung in dem ersten Abströmweg erhalten und desto mehr verschiebt sich die Beteiligung des zweiten Abströmwegs oder die Umschaltung auf den zweiten Abströmweg nach oben.

Auch der Abstand zwischen dem Drallerzeuger und dem Eintrittsquerschnitt des Innenrohrs hat beträchtlichen Einfluss. Je größer dieser Abstand ist, desto mehr wird der zweite Abströmweg begünstigt.

Die Leitschaufeln können verwunden (= Anstellwinkel, der sich beim Fortschreiten längs des Radius ändert) sein oder nicht.

Bei höheren Strömungsgeschwindigkeiten des Abgases im Zulaufrohr bewirkt der Drallerzeuger außerhalb des freien zentralen Strömungswegs eine Drallströmung, die zumindest hinter dem Drallerzeuger und bei Strömungsgeschwindigkeiten in einem oberen Teilbereich des beim Betrieb der Abgasanlage auftretenden Bereichs von Strömungsgeschwindigkeiten eine Mitnahme der Zentralströmung nach sich zieht. Mindestens bei derartigen Betriebszuständen bewegt sich die Strömung an der Innenseite der Umfangswand mit sehr erheblicher Strömungskomponente in Umfangsrichtung. Je weiter die Strömung in Axialrichtung der Umfangswand weiter strömt, desto mehr klingt die Umfangskomponente ab, wobei kinetische Energie der Strömung verloren geht, was sich letztlich als Druckverlust der Strömungsweiche äußert. Wenn man hingegen die Strömung im Ringraum zwischen dem Innenrohr und der Umfangswand vor dem Ende der Strömungsweiche wieder in Axialrichtung umlenkt, kann man die kinetische Energie der Drallkomponente der Strömung zumindest zum Teil zurückgewinnen, so dass die Strömungsweiche einen geringeren Druckverlust als ohne diese Maßnahme hat.

Deshalb ist es bevorzugt, dass in dem Ringraum zwischen dem Innenrohr und der Umfangswand ein Drallverringerer vorgesehen ist. Ganz ähnlich wie bei dem Drallerzeuger im Zulaufrohr sind konkrete bevorzugte Ausführungsformen des Drallverringerers ein ringartiger Kranz von Leitschaufeln oder ein wendelartiges Strömungsleitelement. Die radiale Höhe des Drallverringerers kann im oberen Grenzfall so groß sein, dass er nach innen bis zu dem Innenrohr geht; das Innenrohr kann mit Hilfe des Drallverringerers in der Strömungsweiche befestigt sein. In den meisten Fällen hat der Drallverringerer jedoch eine deutlich geringere Höhe und erstreckt sich vorzugsweise mit einer Höhe von 5 bis 20 mm radial von der Umfangswand nach innen. Das weiter vorne zu den Geometrieparametern der Leitschaufeln bzw. des Strömungsleitelements Gesagte gilt analog auch beim Drallverringerer, wobei es hier naturgemäß nicht um Strömungsbestimmung in den ersten Abströmweg und in den zweiten Abströmweg geht, sondern um Rückgewinnung von Strömungsenergie. Man kann die Umfangswand auch aus einem wendelartig profilierten Rotor, wie es kommerziell erhältlich ist, herstellen. In diesem Fall hat man den Drallverringerer gleichsam vom Ausgangsmaterial her zur Verfügung.

In Weiterbildung der Erfindung ist es bevorzugt, wenn sich der Strömungsquerschnitt des Ringraums längs der Strömungsweiche ändert. So kann man z.B. durch allmähliche Vergrößerung des Strömungsquerschnitts in dem Ringraum eine diffusorartige Ausbildung erreichen.

Das Zulaufrohr hat im Interesse einer effektiven Erzeugung der Drallströmung vorzugsweise einen kreisrunden Querschnitt. Ein kreisrunder Querschnitt ist auch für den Verlauf der Umfangswand bzw. die Strömungsweiche insgesamt bevorzugt, weil dies für eine spiralförmige Durchströmung die besten Strömungsvoraussetzungen bietet. Alternativ ist jedoch eine im Wesentlichen elliptische Konfiguration des Strömungsweichenquerschnitts bevorzugt. Eine im Wesentlichen elliptische Querschnittskonfiguration ist bei Schalldämpfern, die unter dem Boden von Kraftfahrzeugen angebracht sind, recht häufig anzutreffen. Wie bei Schalldämpfern ist bei der erfindungsgemäßen Strömungsweiche die geringere Bauhöhe im Vergleich zu einer querschnittsgleichen Strömungsweiche mit kreisrundem Querschnitt als Vorteil hervorzuheben.

In Weiterbildung der Erfindung ist vorzugsweise in dem ersten Abströmweg oder in dem zweiten Abströmweg eine gezielt den Strömungswiderstand erhöhende Ausbildung vorgesehen, insbesondere in Form einer lokalen Verengung des Strömungsquerschnitts, einer perforierten Querwand oder dergleichen. Eine den Strömungswiderstand gezielt erhöhende Ausbildung in dem ersten Strömungsweg begünstigt das Abströmen in dem zweiten Strömungsweg und umgekehrt. Gezielt den Strömungswiderstand erhöhende Ausbildungen sind ein äußerst wirksames Mittel, um praktisch perfekte Umschaltschärfe der Strömungsweiche zu erreichen, wobei man in diesem Fall bei der Auslegung des Drallerzeugers mehr Freiheit gewonnen hat.

Vorzugsweise ist die erfindungsgemäße Abgasanlage insgesamt so aufgebaut, dass sich die Strömungsweiche stromaufwärts von einem Wärmetauscher befindet, wobei der Wärmetauscher an den zweiten Strömungsweg angeschlossen ist. Nach dem Starten des Verbrennungsmotors ist der Abgasstrom zunächst relativ kalt, zumindest überwiegend herrschen niedrige Lastzustände mit niedrigen Drehzahlen. Deshalb wird das Abgas überwiegend durch den ersten Abströmweg geleitet und strömt dann weiter durch die Abgasanlage. Wenn der Verbrennungsmotor Betriebstemperatur erreicht hat und höhere Lastzustände herrschen, strömt das Abgas überwiegend durch den Wärmetauscher und wird dort durch Wärmeabfuhr an die Umgebung abgekühlt, ehe es einen oder mehrere, katalytische Abgaskonverter weiter stromab in der Abgasanlage erreicht. - Weitere Möglichkeiten des Umfelds in der Abgasanlage, in dem die Strömungsweiche arbeitet, sind weiter vorn genannt worden.

Vorzugsweise weist die Strömungsweiche zwischen dem Zulaufrohr und der Umfangswand einen Erweiterungsabschnitt auf (wobei der Erweiterungsabschnitt nicht zwingend unmittelbar an dem Zulaufrohr beginnen und an der Umfangswand enden muß), was in vielen Fällen die gewünschte Art der Strömungsbeeinflussung verbessert. Diese Querschnittserweiterung ist aber nicht zwingend erforderlich.

Wenn in der vorliegenden Anmeldung von Strömungsgeschwindigkeit und Temperatur des durch das Zulaufrohr zuströmenden Abgasstroms gesprochen wird, wird ein Strömungsquerschnitt vor dem Drallerzeuger betrachtet. Da Strömungsgeschwindigkeit und Temperatur über den Querschnitt nicht konstant sind, sind über den Querschnitt gemittelte Werte gemeint. Angesichts der Abgaspulsationen sind für geeignete kurze Zeitintervalle zeitlich gemittelte Werte gemeint. Insgesamt könnte man alternativ den Massenstrom betrachten, insbesondere weil hier die Querschnittsmittelung nicht erforderlich ist. Konstante Abgastemperatur betrachtet, hängt die mittlere Strömungsgeschwindigkeit unmittelbar mit dem Massenstrom zusammen. Konstanten Massenstrom betrachtet, hängt die gemittelte Strömungsgeschwindigkeit unmittelbar mit der Abgastemperatur zusammen. Statt mit dem Begriff Strömungsgeschwindigkeit könnte man die Aussagen in der vorliegenden Anmeldung auch mit dem Begriff "temperaturnormierter Massenstrom" verknüpfen.

Es gibt Ausführungsformen, bei denen es günstig ist, die Längsmittelachse des Innenrohrs gegenüber der Längsmittelachse der Gesamt-Strömungsweiche versetzt anzuordnen. Als typische Beispiele hierfür seien nicht-zentrale Positionierung des Zulaufrohrs und schräge Einmündung des Zulaufrohrs bei der Strömungsweiche genannt. Der Eintrittsquerschnitt des Innenrohrs soll so positioniert sein, daß der durch den freien zentralen Strömungsweg strömende Abgasstrom bzw. der nicht von der Drallströmung erfaßte Teil des Abgasstroms in den Eintrittsquerschnitt des Innenrohrs gelangt.

Es wird betont, dass nicht nur die bisher angesprochene Abgasanlage Gegenstand der Erfindung ist, sondern auch die angesprochene Strömungsweiche für sich ein Gegenstand der Erfindung ist. Alle offenbarten Vorzugsausbildungen gelten nicht nur für die Abgasanlage insgesamt, sondern auch für deren, die Erfindung verkörpernden Bestandteil "Strömungsweiche".

Aus dem Dokument WO 00/12879 ist ein katalytischer Abgaskonverter mit einem zugeordneten Zulaufrohr bekannt, in dem ein Drallerzeuger, der einen zentralen Strömungsweg durch das Zulaufrohr frei lässt, angeordnet ist. Dort ist jedoch die Ausbildung so, dass eine gleichmäßige Anströmung der vorderen Stirnfläche des Katalysatorkörpers erreicht werden soll.

Die Erfindung und bevorzugte Ausführungen der Erfindung werden nachfolgend anhand von.schematisiert zeichnerisch dargestellten Ausführungsbeispielen noch näher erläutert. Es zeigt:
Fig. 1 eine Abgasanlage in Seitenansicht, sozusagen einbaufertig zum Einbau von unten an ein Kraftfahrzeug mit Verbrennungsmotor;
Fig. 2 eine Strömungsweiche im Längsschnitt;
Fig. 3 die Strömungsweiche von Fig. 2 in der geschnittenen Stirnansicht gemäß III-III in Fig. 2;
Fig. 4 eine Strömungsweiche im Längsschnitt, analog Fig. 2, mit Veranschaulichung der Strömung bei einem ersten Schaltzustand;
Fig. 5 eine Strömungsweiche im Längsschnitt, analog Fig. 2 und Fig. 4, mit Veranschaulichung der Strömung bei einem zweiten Schaltzustand;
Fig. 6 eine Strömungsweiche im Längsschnitt, analog Fig. 2, Fig. 4, Fig. 5, mit eingezeichneten Geometrieparametern;
Fig. 7 eine Strömungsweiche im Längsschnitt, analog Fig. 2 und Fig. 4 bis 6, mit Drallverringerer;
Fig. 8 einen Teil einer Strömungsweiche im Längsschnitt mit wendelförmigem Strömungsleitelement.

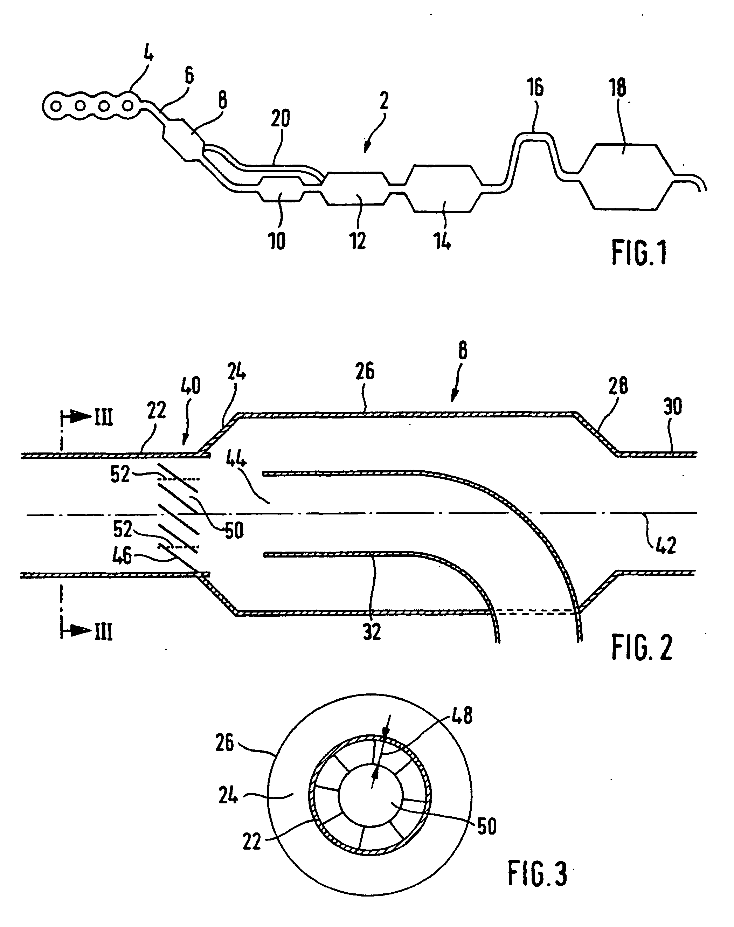

In Fig. 1 ist eine Abgasanlage 2 für einen Verbrennungsmotor eines Fahrzeugs mit ihren wesentlichsten Komponenten dargestellt. Fortschreitend vom stromaufwärtigen Ende zum stromabwärtigen Ende hat man die folgenden Komponenten: Krümmer 4, der an den Zylinderkopf des Verbrennungsmotors angeschraubt wird und die Abgase aus den Zylindern des Verbrennungsmotors in einen gemeinsamen Rohrabschnitt 6 zusammenführt; Strömungsweiche 8; Wärmetauscher 10 zur Wärmeabfuhr an die Umgebung; katalytischer Abgaskonverter 12; Mittelschalldämpfer 14; Rohrabschnitt 16, der um die Hinterachse des Kraftfahrzeugs herumführt; Endschalldämpfer 18. Auf eine zusätzliche Rohrleitung 20 zwischen der Strömungsweiche 8 und dem katalytischen Abgaskonverter 12 wird weiter unten genauer eingegangen.

In Fig. 2 ist eine erfindungsgemäße Strömungsweiche 8 dargestellt. Man erkennt ein Zulaufrohr 22 mit kreisförmigem Querschnitt, einen konusförmigen Erweiterungsabschnitt 24, eine kreiszylindrische Umfangswand 26, einen konusförmigen Verjüngungsabschnitt 28, ein Ablaufrohr 30 mit kreisförmigem Querschnitt, ein Innenrohr 32 mit kreisförmigem Querschnitt und einen Drallerzeuger 40, der kurz vor dem in Fig. 2 rechten Ende des Zulaufrohrs 22, wo es in den Erweiterungsabschnitt 24 übergeht, in dem Zulaufrohr 22 angeordnet ist. Die Strömungsweiche 8 hat insgesamt eine Längsmittelachse 42. Das Innenrohr 32 läuft von seinem in Fig. 2 linken Anfang aus zunächst koaxial mit der Achse 42 und biegt dann nach außen ab und ist durch die Umfangswand 26 und/oder den Verjüngungsabschnitt 28 aus der eigentlichen Strömungsweiche 8 herausgeführt. Das Innenrohr 32 hat einen vorderen Eintrittsquerschnitt 44.

Der Drallerzeuger 40 besteht aus einem umfangsmäßig verteilten Kranz von Leitschaufeln 46, die in Fig. 2 schematisiert als schräg gestellt Bleche dargestellt sind und in Fig. 3 etwas anschaulicher zu sehen sind. Die Leitschaufeln 46 sind an ihrem radial äußeren Rand an der Innenseite des Zulaufrohrs 22 angeschweißt und haben eine radiale Höhe 48, siehe Fig. 3. Die Leitschaufeln 46 lassen mit ihren inneren Rändern einen zentralen Strömungsweg 50 frei, dessen Durchmesser bei dem gezeichneten Ausführungsbeispiel etwa 60% des Innendurchmessers des Zulaufrohrs 22 beträgt. In Fig. 2 ist der Durchmesser des zentralen Strömungswegs 50 mit zwei gepunkteten Linien 52 angedeutet. Der Durchmesser des Eintrittsquerschnitts 44 des Innenrohrs 32 ist ein wenig größer als der Durchmesser des zentralen Strömungswegs 50, wobei sich dieser Durchmesserunterschied bei einem Vergleich der Strömungsquerschnitte naturgemäß viel stärker auswirkt. Der Eintrittsquerschnitt 44 ist auf die Verlängerung des zentralen Strömungswegs 50 ausgerichtet.

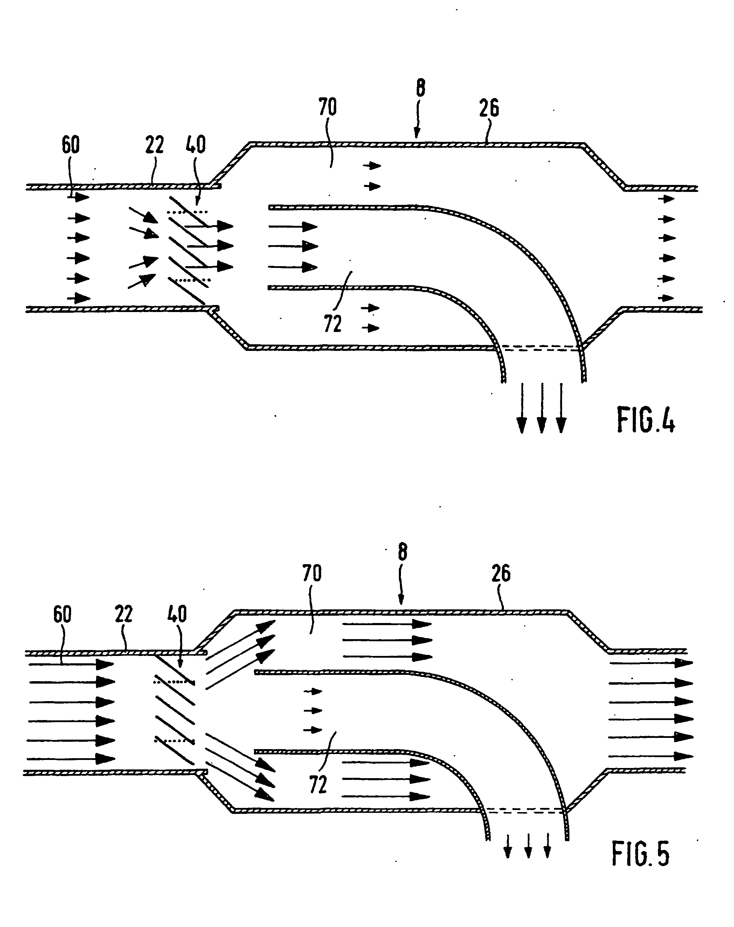

Anhand der Figuren 4 und 5 werden zwei unterschiedliche Betriebszustände der Strömungsweiche 8 veranschaulicht.

Ein beim Betrieb des Verbrennungsmotors durch die Abgasanlage 2 strömender Abgasstrom ist, was das Zulaufrohr 22 vor dem Drallerzeuger 40 anlangt, mit Pfeilen 60 gezeichnet. Der dortige Abgasstrom 60 hat bei einem bestimmten Betriebzustand des Verbrennungsmotors einen bestimmten Massenstrom, eine daraus resultierende bestimmte (über den Strömungsquerschnitt gemittelte) Strömungsgeschwindigkeit und eine (über den Strömungsquerschnitt gemittelte) Temperatur.

Bei Strömungsgeschwindigkeiten, die in einem unteren Teilbereich des beim Betrieb der Abgasanlage 2 auftretenden Bereichs von Strömungsgeschwindigkeiten sind, hat das Vorhandensein des Drallerzeugers 40 nur geringen Einfluss auf die Strömung. Der Drallerzeuger 40 stellt einen Strömungswiderstand dar, so dass die Strömung weit überwiegend durch den zentralen Strömungsweg 50 geht. Außerdem ist der strömungsmechanische Einfluss der Leitschaufeln 46 auf die Strömung relativ gering, weil die Leitschaufeln 46 auf Strömungsbeeinflussung bei höheren Strömungsgeschwindigkeiten ausgelegt sind. In Folge der geschilderten Verhältnisse strömt die den Abschnitt, wo sich der Drallerzeuger 40 befindet, verlassende Strömung zu nahezu 100% in den Eintrittsquerschnitt 44 des Innenrohrs 32. In einem Ringraum 70 zwischen dem Innenrohr 32 und der Umfangswand 26 der Strömungsweiche 8 strömt ein kleiner Teil des zuströmenden Abgasstroms 60 mit kleiner Strömungsgeschwindigkeit. All diese Verhältnisse sind in Fig. 4 mit Pfeilen veranschaulicht, die man sich als Veranschaulichung der Strömungsgeschwindigkeit oder auch als Veranschaulichung des Massenstroms vorstellen kann. Der Innenraum des Innenrohrs 32 stellt einen ersten Abströmweg 72 dar, und der Ringraum 70 zwischen dem Innenrohr 32 und der Umfangswand 26 stellt einen zweiten Abströmweg 70 dar.

Wenn hingegen die Strömungsgeschwindigkeit des Abgasstroms 60 in einem oberen Teilbereich des beim Betrieb in der Abgasanlage 2 auftretenden Bereichs von Strömungsgeschwindigkeiten ist, ist der Drallerzeuger 40 in Funktion (zumal der zuströmende Abgasstrom 60 nicht mehr so leicht nahezu insgesamt in den zentralen Strömungsweg 50 einströmen kann, weil eine starke düsenartige Beschleunigung stattfinden müsste); die beim Durchströmen des Drallerzeugers 40 aufgeprägte Drallströmung übt Zentrifugalkräfte auf die Strömung aus, wodurch die Strömung im Bereich des Erweiterungsabschnitts radial nach außen in den Ringraum 70 geht. Im Bereich des Drallerzeugers 40 und im Bereich zwischen dem Drallerzeuger 40 und dem Eintrittsquerschnitt 44 des Innenrohrs 32 übt die äußere Drallströmung Zähigkeitskräfte auf den durch den zentralen Strömungsweg 50 strömenden Teil des Abgasstroms 60 aus und prägt weitgehend diesem Teil des Abgasstroms auch eine Umfangskomponente der Strömungsgeschwindigkeit auf. Als Ergebnis zeigt sich, dass bei hohen Strömungsgeschwindigkeiten ein weit überwiegender Teil des Gesamt-Abgasstroms 60, bei geeigneter Auslegung sogar ein nahe 100% liegender Teil des Abgasstroms 60, durch den Ringraum 70 strömt. All diese Verhältnisse sind in Fig. 5 veranschaulicht.

Zwischen den beiden beschriebenen Extremen gibt es einen mittleren Bereich von Strömungsgeschwindigkeiten, bei denen ein erster, merklicher Teil des Gesamt-Abgasstroms 60 durch den ersten Abströmweg 72 strömt und ein zweiter, merklicher Teil des Gesamt-Abgasstroms 60 durch den zweiten Abströmweg 70 strömt.

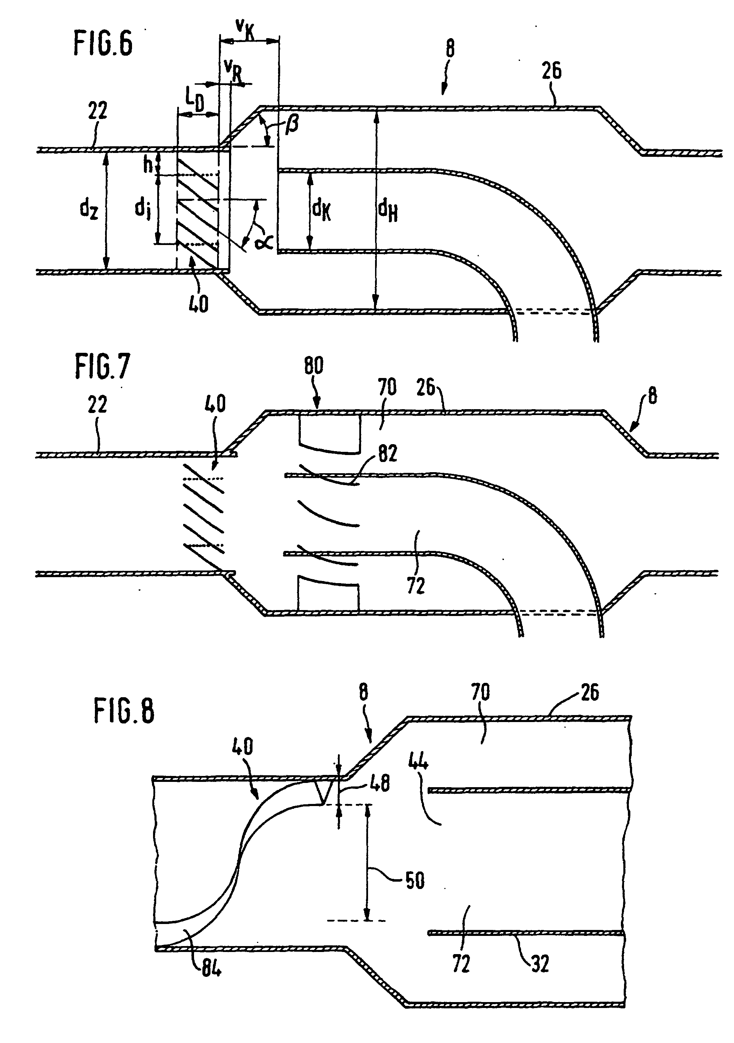

In Fig. 6 sind Geometrieparameter der Strömungsweiche 8 eingezeichnet:
Anstellwinkel alpha
Höhe h der Leitschaufeln 46
Abstand v_{R} zwischen dem Drallerzeuger und dem dem Erweiterungsabschnitt 24 benachbarten Ende des Zulaufrohrs 22
Abstand v_{K} zwischen dem Drallerzeuger und dem Eintrittsquerschnitt 44
Durchmesser d_{z} des Zulaufrohrs 22
Durchmesser dᵢ des zentralen Strömungswegs 50
Durchmesser d_{K} des Innenrohrs
Durchmesser d_{H} der Umfangswand-Konfiguration
Winkel.beta der Erweitung des Erweiterungsabschnitts

Es wird darauf hingewiesen, dass der Erweiterungsabschnitt sich nicht unbedingt konusförmig erweitern muss. Der Grenzfall der radial stehenden Wand und deshalb sprungartigen Durchmesservergrößerung von Zulaufrohr 22 zu Umfangswand 26 ist möglich. Es wird ferner darauf hingewiesen, dass die Umfangswand 26 keineswegs unbedingt eine kreisförmige Konfiguration im axial betrachteten Querschnitt haben muss. Andere Querschnittsformen sind möglich, solange sie nicht die geschilderte Drallströmung und das Abströmen in dem zweiten Abströmweg 70 ungebührlich behindern. Ganz besonders ist möglich eine im Wesentlichen elliptische Querschnittskonfiguration.

In Fig. 7 ist veranschaulicht, wie ein Drallverringerer 80 im zweiten Abströmweg 70 angeordnet sein kann. Nicht weit strömungsabwärts von dem Eintrittsquerschnitt 44 ist in dem Ringraum 70 ein Kranz von umfangsmäßig verteilten Leitschaufeln 82 angeordnet, wobei jede Leitschaufel 82 mit ihrem äußeren Rand innen an der Umfangswand 26 angeschweißt ist. Die Leitschaufeln 82 sind so angestellt, dass die Umfangs-Strömungskomponente, die die Strömung im Ringraum 70 vor dem Drallverringerer 80 hatte, möglichst weitgehend reduziert wird. Im Idealfall ist die Strömung in dem zweiten Abströmweg 70 hinter dem Drallverringerer 80 praktisch rein axial. Diesen Idealzustand wird man allerdings nur bei Strömungsgeschwindigkeiten in der Nähe der Auslegungs-Strömungsgeschwindigkeit des Drallverringerers 80 erreichen.

Fig. 7 veranschaulicht auch, wie bei dem Drallverringerer 80 die Höhe der Leitschaufeln 82 längs der Strömungsweiche zunehmen kann. Ganz analog kann man sich eine derartige radiale Höhenzunahme bei den Leitschaufeln 46 des Drallerzeugers 40 vorstellen.

Wenn die Leitschaufeln 82 des Drallverringerers 80 bis zu dem Innenrohr 32 reichen, können sie zur dortigen Befestigung und Abstützung des Innenrohrs 32 dienen. Es ist möglich, nur einzelne Leitschaufeln 82 so hoch zu machen, dass sie zugleich Befestigungselemente für das Innenrohr 32 sind.

In Fig. 8 ist eine Ausführungsform dargestellt, bei der der Drallerzeuger 40 durch ein wendelförmig verlaufendes Strömungsleitelement 84 statt durch Leitschaufeln 46 verwirklicht ist. Das Strömungsleitelement 84 hat eine radiale Höhe 48. Statt nur ein wendelförmiges Strömungsleitelement 46 (welches mindestens eine 360°-Windung lang sein sollte) vorzusehen, wie in Fig. 8 gezeichnet, kann man auch zwei (oder noch mehr) Strömungsleitelemente 84 vorsehen, die um 180° (bzw. 90°, 72° etc.) versetzt beginnen. Der strömungsmechanische Effekt des Strömungsleitelements 84 ist analog dem Effekt, der vorstehend im Zusammenhang mit den Leitschaufeln 46 beschrieben worden ist. Das Strömungsleitelement 84 ist mit seinem Außenrand an der Innenseite des Zulaufrohrs 22 angeschweißt.

Es wird betont, dass statt des in Fig. 7 gezeichneten Drallverringerers 80 auch ein Strömungsleitelement analog dem Strömungsleitelement 84 im Zulaufrohr 22 vorgesehen sein kann, allerdings mit gegensätzlichem Anstellwinkel.

Fig. 1 veranschaulicht, dass man das Innenrohr 32, nachdem es aus der eigentlichen Strömungsweiche 80 herausgeführt ist, über die Rohrleitung 20 an die Zuströmseite des katalytischen Abgaskonverters 12 anschließen kann, wobei die Rohrleitung 20 einen Bypass des Wärmetauschers 10 darstellt. Die Rohrleitung 20 kann wärmeisoliert sein. Somit wird bei niedrigen Strömungsgeschwindigkeiten des Abgasstroms 60 der Wärmetauscher 10 umgangen; die Betriebszeit zum Aufheizen des katalytischen Abgaskonverters 12 wird möglichst kurz gehalten. Bei hohen Strömungsgeschwindigkeiten des Abgasstroms 60 wird hingegen weit überwiegend oder sogar praktisch vollständig der Wärmetauscher 10 durchströmt; der katalytische Abgaskonverter 12 bleibt von schädlich hohen Temperaturen verschont.

## Patentansprüche

1. Abgasanlage für Verbrennungsmotoren, aufweisend eine Strömungsweiche (8), welche einem zuströmenden Abgasstrom einen ersten Abströmweg (72) und einen zweiten Abströmweg (70) bietet,
wobei die Strömungsweiche (8) ein Zulaufrohr (22) und stromabwärtig des Zulaufrohrs (22) eine Umfangswand (26) sowie ein zulaufrohrseitig offenes Innenrohr (32) aufweist, wobei der Innenraum des Innenrohrs (32) den ersten Abströmweg (72) darstellt und der Ringraum zwischen dem Innenrohr (32) und der Umfangswand (26) den zweiten Abströmweg (70) darstellt,
**dadurch gekennzeichnet,**
**dass** in dem Zulaufrohr (22) ein Drallerzeuger (40) angeordnet ist, der einen zentralen Strömungsweg (50) durch das Zulaufrohr (22) frei lässt,
und **dass** der Eintrittsquerschnitt (44) des Innenrohrs (32) in Axialabstand von dem Drallerzeuger (40) angeordnet ist und im Wesentlichen auf die Verlängerung des freien zentralen Strömungswegs (50) ausgerichtet ist.

2. Abgasanlage nach Anspruch 1,
**dadurch gekennzeichnet, dass** der Eintrittsquerschnitt (44) des Innenrohrs (32) seiner Größe nach in dem Bereich von dem Querschnitt des freien zentralen Strömungswegs (50) bis zu dem Querschnitt des stromabwärtigen Endes des Zulaufrohrs (22) ist.

3. Abgasanlage nach Anspruch 1 oder 2,
**dadurch gekennzeichnet, dass** die Strömungsweiche (8) so ausgelegt ist, dass mindestens 40% des zuströmenden Abgasstroms in dem ersten Strömungsweg (72) abströmen, wenn der Abgasstrom eine Strömungsgeschwindigkeit in einem unteren Teilbereich des beim Betrieb in der Abgasanlage (2) auftretenden Bereichs von Strömungsgeschwindigkeiten hat.

4. Abgasanlage nach einem der Ansprüche 1 bis 3,
**dadurch gekennzeichnet, dass** die Strömungsweiche (8) so ausgelegt ist, dass mindestens 80% des zuströmenden Abgasstroms in dem zweiten Strömungsweg (70) abströmen, wenn der Abgasstrom eine Strömungsgeschwindigkeit in einem oberen Teilbereich des beim Betrieb in der Abgasanlage (2) auftretenden Bereichs von Strömungsgeschwindigkeiten hat.

5. Abgasanlage nach einem der Ansprüche 1 bis 4,
**dadurch gekennzeichnet, dass** der Drallerzeuger (40) in dem Zulaufrohr (22) befestigt ist, vorzugsweise angeschweißt ist.

6. Abgasanlage nach einem der Ansprüche 1 bis 4,
**dadurch gekennzeichnet, dass** der Drallerzeuger (40) integral mit dem Zulaufrohr (22) hergestellt worden ist.

7. Abgasanlage nach einem der Ansprüche 1 bis 6,
**dadurch gekennzeichnet, dass** der Drallerzeuger (40) einen ringförmigen Kranz on Leitschaufeln (46) aufweist.

8. Abgasanlage nach einem der Ansprüche 1 bis 6,
**dadurch gekennzeichnet, dass** der Drallerzeuger (40) mindestens ein wendelförmig längs des Zulaufrohrs (22) verlaufendes Strömungsleitelement (84) aufweist.

9. Abgasanlage nach Anspruch 7 oder 8,
**dadurch gekennzeichnet, dass** der Anstellwinkel der Leitschaufeln (46) oder des Strömungsleitelements (84) längs des Zulaufrohrs (22) zunimmt.

10. Abgasanlage nach einem der Ansprüche 7 bis 9,
**dadurch gekennzeichnet, dass** die radiale Höhe der leitschaufeln (46) oder des Strömungsleitelements (84) längs des Zulaufrohrs (22) zunimmt.

11. Abgasanlage nach einem der Ansprüche 1 bis 10,
**dadurch gekennzeichnet, dass** in dem Ringraum zwischen dem Innenrohr (32) und der Umfangswand (26) ein Drallverringerer (80) vorgesehen sit.

12. Abgasanlage nach einem der Ansprüche 1 bis 11,
**dadurch gekennzeichnet, dass** sich der Strömungsquerschnitt des Ringraums längs der Strömungsweiche (8) andert.

13. Abgasanlage nach einem der Ansprüche 1 bis 12,
**dadurch gekennzeichnet, dass** die Umfangswand (26) der Strömungsweiche (8), im Querschnitt quer zur Durchströmungsrichtung betrachtet, eine im Wesentlichen elliptische Konfiguration hat.

14. Abgasanlage nach einem der Ansprüche 1 bis 13,
**dadurch gekennzeichnet, dass** in dem ersten Abströmweg (72) oder in dem zweiten Abströmweg (70) eine gezielt den Strömungswiderstand erhöhende Ausbildung vorgesehen ist.

15. Abgasanlage nach einem der Ansprüche 1 bis 14,
**dadurch gekennzeichnet, dass** der zweite Abströmweg (70) an eine Rohrleitung angeschlossen ist, die zu einem Wärmetauscher (10) führt.

16. Abgasanlage nach einem der Ansprüche 1 bis 15,
**dadurch gekennzeichnet, daß** die Strömungsweiche (8) zwischen dem Zulaufrohr (22) und der Umfangswand (26) einen Erweiterungsabschnitt (24) aufweist.

## Claims

1. Exhaust system for an internal combustion engine, comprising a flow diverter (8) which provides a first outflow path (72) and a second outflow path (70) for an inflowing exhaust-gas flow, the flow diverter (8) having a feed pipe (22) and a circumferential wall (26) downstream of the feed pipe (22) and also an inner pipe (32) which is open on the feed-pipe side, the interior space of the inner pipe (32) constituting the first outflow path (72), and the annular space between the inner pipe (32) and the circumferential wall (26) constituting the second outflow path (70), **characterized in that** a swirl generator (40) is arranged in the feed pipe (22), this swirl generator (40) leaving a central flow path (50) clear through the feed pipe (22), and **in that** the inlet cross section (44) of the inner pipe (32) is arranged at an axial distance from the swirl generator (40) and is aligned essentially with the extension of the free central flow path (50).

2. Exhaust system according to Claim 1, **characterized in that** the size of the inlet cross section (44) of the inner pipe (32) is within the range between the cross section of the free central flow path (50) and the cross section of the downstream end of the feed pipe (22).

3. Exhaust system according to Claim 1 or 2,
**characterized in that** the flow diverter (8) is designed in such a way that at least 40% of the inflowing exhaust-gas flow flows off in the first flow path (72) if the exhaust-gas flow has a flow velocity within a bottom partial range of the range of flow velocities which occurs in the exhaust system (2) during operation.

4. Exhaust system according to one of Claims 1 to 3, **characterized in that** the flow diverter (8) is designed in such a way that at least 80% of the inflowing exhaust-gas flow flows off in the second flow path (70) if the exhaust-gas flow has a flow velocity within a top partial range of the range of flow velocities which occurs in the exhaust system (2) during operation.

5. Exhaust system according to one of Claims 1 to 4, **characterized in that** the swirl generator (40) is fastened, preferably welded on, in the feed pipe (22).

6. Exhaust system according to one of Claims 1 to 4, **characterized in that** the swirl generator (40) has been integrally produced with the feed pipe (22).

7. Exhaust system according to one of Claims 1 to 6, **characterized in that** the swirl generator (40) has an annular ring of guide blades (46).

8. Exhaust system according to one of Claims 1 to 6, **characterized in that** the swirl generator (40) has at least one flow baffle element (84) running helically along the feed pipe (22).

9. Exhaust system according to Claim 7 or 8,
**characterized in that** the setting angle of the guide blades (46) or of the flow baffle element (84) increases along the feed pipe (22).

10. Exhaust system according to one of Claims 7 to 9, **characterized in that** the radial height of the guide blades (46) or of the flow baffle element (84) increases along the feed pipe (22).

11. Exhaust system according to one of Claims 1 to 10, **characterized in that** a swirl reducer (80) is provided in the annular space between the inner pipe (32) and the circumferential wall (26).

12. Exhaust system according to one of Claims 1 to 11, **characterized in that** the flow cross section of the annular space changes along the flow diverter (8).

13. Exhaust system according to one of Claims 1 to 12, **characterized in that** the circumferential wall (26) of the flow diverter (8), as viewed in cross section transversely to the throughflow direction, has an essentially elliptical configuration.

14. Exhaust system according to one of Claims 1 to 13, **characterized in that** a configuration which specifically increases the flow resistance is provided in the first outflow path (72) or in the second outflow path (70).

15. Exhaust system according to one of Claims 1 to 14, **characterized in that** the second outflow path (70) is connected to a pipeline which leads to a heat exchanger (10).

16. Exhaust system according to one of Claims 1 to 15, **characterized in that** the flow diverter (8) has a widening section (24) between the feed pipe (22) and the circumferential wall (26).

## Revendications

1. Installation de gaz d'échappement pour des moteurs à combustion interne, présentant un organe de déviation d'écoulement (8) qui offre à un courant de gaz d'échappement entrant un premier chemin d'évacuation (72) et un deuxième chemin d'évacuation (70), dans laquelle l'organe de déviation d'écoulement (8) comprend un tube d'entrée (22) et, en aval du tube d'entrée (22), une paroi périphérique (26) ainsi qu'un tube intérieur (32) ouvert du côté du tube d'entrée, dans laquelle l'espace intérieur du tube intérieur (32) représente le premier chemin d'évacuation (72) et l'espace annulaire entre le tube intérieur (32) et la paroi périphérique (26) représente le deuxième chemin d'évacuation (70), **caractérisée en ce qu'**un générateur de tourbillon (40), qui laisse libre un chemin d'écoulement central (50) à travers le tube d'entrée (22), est disposé dans le tube d'entrée (22) et **en ce que** la section transversale d'entrée (44) du tube intérieur (32) est disposée à distance axiale du générateur de tourbillon (40) et est orientée sensiblement dans le prolongement du chemin d'écoulement central libre (50).

2. Installation de gaz d'échappement selon la revendication 1, **caractérisée en ce que** la section transversale d'entrée (44) du tube intérieur (32) est, en grandeur, située dans la plage comprise entre la section transversale du chemin d'écoulement central libre (50) et la section transversale de l'extrémité en aval du tube d'entrée (22).

3. Installation de gaz d'échappement selon la revendication 1 ou 2, **caractérisée en ce que** l'organe de déviation d'écoulement (8) est conçu de telle façon qu'au moins 40% du courant de gaz d'échappement entrant s'évacuent dans le premier chemin d'écoulement (72), lorsque le courant de gaz d'échappement a une vitesse d'écoulement située dans une plage partielle inférieure de la plage de vitesses d'écoulement existant en fonctionnement dans l'installation de gaz d'échappement (2).

4. Installation de gaz d'échappement selon l'une quelconque des revendications 1 à 3, **caractérisée en ce que** l'organe de déviation d'écoulement (8) est conçu de telle façon qu'au moins 80% du courant de gaz d'échappement entrant s'évacuent dans le deuxième chemin d'écoulement (70), lorsque le courant de gaz d'échappement a une vitesse d'écoulement située dans une plage partielle supérieure de la plage de vitesses d'écoulement existant en fonctionnement dans l'installation de gaz d'échappement (2).

5. Installation de gaz d'échappement selon l'une quelconque des revendications 1 à 4, **caractérisée en ce que** le générateur de tourbillon (40) est fixé, de préférence soudé, dans le tube d'entrée (22).

6. Installation de gaz d'échappement selon l'une quelconque des revendications 1 à 4, **caractérisée en ce que** le générateur de tourbillon (40) a été fabriqué d'un seul tenant avec le tube d'entrée (22).

7. Installation de gaz d'échappement selon l'une quelconque des revendications 1 à 6, **caractérisée en ce que** le générateur de tourbillon (40) présente une couronne annulaire d'aubes directrices (46).

8. Installation de gaz d'échappement selon l'une quelconque des revendications 1 à 6, **caractérisée en ce que** le générateur de tourbillon (40) présente au moins un élément de guidage d'écoulement (84) agencé en hélice le long du tube d' entrée (22).

9. Installation de gaz d'échappement selon la revendication 7 ou 8, **caractérisée en ce que** l'angle d'attaque des aubes directrices (46) ou de l'élément de guidage d'écoulement (84) augmente le long du tube d'entrée (22).

10. Installation de gaz d'échappement selon l'une quelconque des revendications 7 à 9, **caractérisée en ce que** la hauteur radiale des aubes directrices (46) ou de l'élément de guidage d'écoulement (84) augmente le long du tube d'entrée (22).

11. Installation de gaz d'échappement selon l'une quelconque des revendications 1 à 10, **caractérisée en ce qu'**il est prévu un réducteur de tourbillon (80) dans l'espace annulaire entre le tube intérieur (32) et la paroi périphérique (26).

12. Installation de gaz d'échappement selon l'une quelconque des revendications 1 à 11, **caractérisée en ce que** la section transversale d'écoulement de l'espace annulaire varie le long de l'organe de déviation d'écoulement (8).

13. Installation de gaz d'échappement selon l'une quelconque des revendications 1 à 12, **caractérisée en ce que** la paroi périphérique (26) de l'organe de déviation d'écoulement (8), considérée en section transversale transversalement à la direction d'écoulement, a une configuration sensiblement elliptique.

14. Installation de gaz d'échappement selon l'une quelconque des revendications 1 à 13, **caractérisée en ce qu'**il est prévu, dans le premier chemin d'évacuation (72) ou dans le deuxième chemin d'évacuation (70), une configuration augmentant volontairement la résistance à l'écoulement.

15. Installation de gaz d'échappement selon l'une quelconque des revendications 1 à 14, **caractérisée en ce que** le deuxième chemin d'évacuation (70) est raccordé à une conduite qui mène à un échangeur de chaleur (10).

16. Installation de gaz d'échappement selon l'une quelconque des revendications 1 à 15, **caractérisée en ce que** l'organe de déviation d'écoulement (8) présente une partie d'élargissement (24) entre le tube d'entrée (22) et la paroi périphérique (26).
